# EUROPÄISCHE PATENTSCHRIFT

(11) **EP 1 153 765 B1**
(45) Veröffentlichungstag und Bekanntmachung des Hinweises auf die Patenterteilung: **22.06.2005**
(21) Anmeldenummer: 01110020.3
(22) Anmeldetag: 26.04.2001
(51) Int. Cl.: B42D 15/10, B32B 27/16, B32B 33/00, B41M 3/14

(54) **Siegelbare Verbundfolie mit einem Sicherheitsmerkmal ein Verfahren zu ihrer Herstellung und ihre Verwendung als Verpackungsmaterial**
Sealable multilayer film with a security feature, production method and its use as packaging material
Feuille stratifiée thermoscellable avec charactéristique de sécurité, méthode de fabrication et son utilisation dans des matériaux d'emballage

(30) Priorität: 09.05.2000 DE 10022493
(43) Veröffentlichungstag der Anmeldung: 14.11.2001
(73) Patentinhaber: Wipak Walsrode GmbH & Co. KG, 29656 Walsrode (DE)
(72) Erfinder: Sperlich, Bernd, Dr., 29664 Walsrode (DE); Wagner, Helmut, 29699 Bomlitz (DE); Schwarz, Willi, 29699 Bomlitz (DE); Wunderlich, Hans, Dr., 29699 Bomlitz (DE)
(74) Vertreter: Läufer, Martina, Dipl.-Chem.

(56) Entgegenhaltungen:
- EP-A- 1 050 482
- EP-A- 1 050 483
- EP-A- 1 050 484
- EP-A- 1 050 485
- US-A- 4 048 736
- US-A- 4 720 420
- US-A- 4 880 697
- US-A- 5 449 552

## Beschreibung

Die vorliegende Erfindung betrifft siegelbare Folienverbunde, die ein Sicherheitsmerkmal beinhalten, um die Folie oder mit der Folie hergestellte Produkte oder in der Folie verpackte Güter in einfacher Weise vor unauthorisierter Nachahmung zu schützen.

Die Erfindung betrifft außerdem ein Verfahren zur Herstellung solcher Folienverbunde sowie die Verwendung des Folienverbundes für Verpackungszwecke.

Die Herstellung und der Verkauf von gefälschten Gütern stellt ein ständig wachsendes Problem dar. Solche gefälschten Produkte werden häufig in täuschend ähnlicher Art wie das Originalgut verpackt, um so potentielle Käufer zu täuschen und sie glauben zu machen, Originale zu erstehen. Dies wirft verschiedene Probleme auf. Zum Einen entgeht dem Hersteller der Originalprodukte Geschäft. Zum Anderen wird der Inhaber der Rechte an dem Produkt um sein geistiges Eigentum betrogen. In vielen Fällen noch wichtiger, stellt sich die Tatsache dar, dass die Nachahmungen oft von minderer Qualität sind und so dem Hersteller einen nicht unerheblichen Imageverlust zufügen. Des weiteren kann die mindere Qualität zu Ansprüchen aus der Produkthaftung führen, so dass es dem Hersteller des Originals obliegt nachzuweisen, dass das den Schaden verursachende Gut nicht von ihm stammt. Aus diesen Gründen heraus ist es wünschenswert, Originalprodukte so zu kennzeichnen, dass es möglich wird, die Originalität zu erkennen.

Die verschiedenartigsten Güter, angefangen bei Lebensmitteln und Tabakwaren über Konsumgüter wie Compact Disc und Videokassetten bis hin zu Ersatzteilen für Autos oder Flugzeuge werden heute in Umverpackungen gehandelt. Häufig werden diese Verpackungen aus Polyolefinfolien, Papier, Pappe oder Verbunden dieser Stoffe hergestellt. Um die Originalität des Packgutes nachzuweisen bieten sich nun die Umverpackungen als Trägermedium für Sicherheitsmerkmale an. So muss das Packgut selbst nicht mit dem Merkmal ausgerüstet werden und man kann z.B. mehrere Produkte eines Markenartikelherstellers mit dem markentypischen Sicherheitsmerkmal versehen, ohne in die Fertigungsabläufe jedes einzelnen Produktes eingreifen zu müssen.

Eine bekannte Form des Originalitätsschutzes stellt der Einsatz von sogenannten Sicherheitsetiketten dar. Auch auf die Verpackung aufgebrachte Prägehologramme finden Einsatz genauso wie über Aufreißstreifen eingebrachte Sicherheitsmerkmale. Letztere sind nicht immer gewünscht, da die bereits im Einsatz befindlichen Verpackungsmaschinen nicht immer für den Einsatz von Aufreißstreifen ausgelegt sind. Prägehologramme oder Sicherheitsetiketten müssen in einem eigenem Arbeitsschritt appliziert werden, was Mehraufwand und damit Mehrkosten verursacht.

Es stellte sich daher die Aufgabe, auf einfache Weise ein Sicherheitsmerkmal in eine Verpackung zu integrieren, ohne dass neue, zusätzliche Arbeitsschritte beim Herstellen der Verpackung notwendig werden.

Erfindungsgemäß gelang dies durch eine mehrschichtige, siegelbare Verbundfolie aus einer biaxial orientierten Polypropylenfolie als Basisfolie und mindestens einer weiteren Polyolefinfolie, dadurch gekennzeichnet, dass auf die Polyolefinfolie ein Lumineszenzfarbstoff aufgebracht worden ist, wobei der Farbstoff zwischen den Folienschichten liegt und die Dicke der Verbundfolie zwischen 8 µm und 26 µm beträgt.
Sowohl die biaxial orientierte Polypropylenfolie als auch die Polyolefinfolie kann Gleitmittel, Antistatikadditive sowie Antiblockmittel enthalten.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,01 bis 3 Gew.- %, vorzugsweise 0,02 bis 1 Gew.-%. Besonders geeignet ist der Zusatz von höheren aliphatischen Säureamiden im Bereich von 0,01 bis 0,25 Gew.- %. Ein insbesondere geeignetes aliphatisches Säureamid ist Erucasäureamid.
Bevorzugte Antistatikadditive sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im Wesentlichen geradkettigen und gesättigten aliphatischen, tertiären Amine mit einem aliphatischen Rest mit 10 bis 20 Kohlenstoffatomen, die mit ω-Hydroxy-(C₁-C₄)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%. Des weiteren ist Glycerinmonostearat geeignet und wird in einer Menge von 0,03 % bis 0,5 Gew.- % als Antistatikum eingesetzt.

Geeignete Antiblockmittel sind anorganische Zusatzstoffe wie Siliciumdioxid, Calciumcarbonat, Magnesiumsilicat, Aluminiumsilikat, Calciumphosphat und dergleichen und/oder vernetzte Polymerteilchen, wie z.B. vernetzte Polymethacrylate oder vernetzte Polyalkylsiloxane und/oder unverträgliche organische Polymerisate wie Polyamide, Polyacrylate, Polymethacrylate, Polyester, Polycarbonate und dergleichen, bevorzugt wird Siliciumdioxid eingesetzt. Bei teilchenförmigen Abstandshaltern liegt die mittlere Teilchengröße zwischen 1 und 10 µm, insbesondere 2 und 5 µm.

Die erfindungsgemäßen Folien werden dabei dem Verfahren der biaxialen Orientierung hergestellt werden, wie z.B Simultanreckung oder sequentielle Reckung. Bevorzugt ist dabei die Herstellung durch eine sequentielle Reckung. Dazu wird der Dickfilm nach der Extrusion und der Verfestigung auf der Gießwalze in Laufrichtung (längs) mit einem Verstreckungsquotienten von 4/1 bis 7/1 bei einer Temperatur von 120°C bis 150°C gereckt. Das Reckverhältnis in Querrichtung liegt vorzugsweise zwischen 8/1 und 12/1 und das Querrecken des Filmes wird bei einer Temperatur zwischen 130°C und 170°C vorgenommen. Die nachfolgende Thermofixierung wird vorzugsweise bei 1°C bis 40°C über der Querrecktemperatur durchgeführt.

Auf die Polyolefinfolie, welche mit der Polypropylenfolie verbunden wird, ist ist ein Lumineszenfarbstoff aufgebracht worden. Dieser kann durch ein beliebiges Verfahren, wie z.B. durch Bedruckung oder Besprühung aufgebracht werden. Die Bedruckung kann ein- oder mehrfarbig erfolgen. Es kommt hierfür jedes für Folien einsetzbare Druckverfahren in Betracht. Insbesondere erfolgt der Druck in typischen Verpackungsdruckverfahren wie Offset-, Sieb-, Flexo-, UV-Flexo oder Tiefdruck. Das Aufbringen der Lumineszenzfarbe kann entweder als separater Arbeitsschritt erfolgen oder direkt vor der Laminierung auf die Polypropylen-Basisfolie im gleichen Arbeitsschritt erfolgen. Das aufgebrachte Merkmal kann entweder eine willkürliche Form aufweisen oder es kann gleichzeitig zur Kennzeichnung des in die Folie verpackten Füllgutes dienen. Diese Kennzeichnung kann z.B. das Herstelldatum oder den Herstellort des eingepackten Gutes betreffen. Um die Affinität der Folienoberfläche der Polyolefinfolie zu den Druckfarben zu verbessern, kann es notwendig sein, die Folie einer Corona-(Sprüh) Vorbehandlung zu unterziehen. Dabei wird der Luftsauerstoff in Form von Carbonyl-, Epoxid-, Ether- oder Alkoholgruppen auf der Folienoberfläche eingelagert. Weitere Methoden der Vorbehandlung von Polypropylenfolien sind die Flamm-, Plasma- und Fluorvorbehandlung. Die Laminierung der Polyolefinfolie mit der Polypropylen-Basisfolie kann entweder nur auf einer Seite der Polypropylen-Basisfolie oder auf beiden Seiten erfolgen. In letzterem Fall ist die Polypropylen-Basisfolie zwischen den beiden Polyolefinfolien eingeschlossen, wobei mindestens eine der Polyolefinfolien mit dem Lumineszenzfarbstoff versehen worden ist.

Ein wesentliches Merkmal der erfindungsgemäßen Verbundfolie besteht darin, dass sich der auf der Polyolefinfolie aufgebrachte Lumineszenzfarbstoff nach der Laminierung mit der Polypropylen-Basisfolie zwischen diesen Folienschichten befindet. Dies bedeutet, dass das Merkmal nicht entfernt werden kann, ohne die Folie und damit auch die Verpackung sichtbar zu beschädigen. Da bei marktüblichen Folien, die im Konter- oder Frontaldruckverfahren bedruckt sind, die Druckfarbe durch organische Lösungsmittel, wie z.B. Aceton leicht ablösbar ist, kann so mit sehr einfachen Mitteln unterschieden werden, ob es sich um die erfindungsgemäße Folie oder um eine Fälschung handelt. Auch die nachträgliche Lackierung einer bedruckten Folie ist durch organische Lösungsmittel ablösbar.

Ein weiteres wesentliches Merkmal der vorliegenden Erfindung besteht darin, dass die erfindungsgemäße Verbundfolie dünner als 26 µm ist. Solch dünne Verbundfolien sind nur herstellbar, wenn die Dicke von mindestens einer Solofolie, aus der die siegelbare Verbundfolie besteht, kleiner als 13 µm ist. Siegelbare Polyolefinfolien dieser Dicke sind aber nur schwer herstellbar, was eine Nachstellung bzw. Fälschung der erfindungsgemäßen Verbundfolie erheblich erschwert. In einer bevorzugten Ausführungsform beträgt die Dicke der erfindungsgemäßen Verbundfolie zwischen. 10 und 20 µm.

Die erfindungsgemäßen Verbundfolien können besonders einfach und wirtschaftlich dadurch hergestellt werden, dass die Laminierung der Polyolefinfolie mit der Polypropylen-Basisfolie entweder vor der Orientierung der Basisfolie oder zwischen der Längs- und der Querorientierung der Basisfolie erfolgt. In beiden Fällen ist die eingesetzte Polyolefinfolie um den Faktor f dicker als in der erfindungsgemäßen Verbundfolie. Für den Fall, dass die Laminierung der Polyolefinfolie vor der Orientierung der Polypropylenfolie erfolgt, entspricht der Faktor f dem Gesamtreckverhältnis der biaxial orientierten Polypropylenfolie. In diesem Fall erfolgt erst die Laminierung und anschließend entweder die sequentielle oder simultane Reckung des Folienverbundes in Maschinenlaufrichtung und quer zur Maschinenlaufrichtung. In diesem Fall sind in der erfindungsgemäßen Verbundfolie sowohl die Polypropylen-Basisfolie als auch die laminierte Polyolefinfolie biaxial orientiert. Bevorzugt ist der Fall, dass die Polypropylen-Basisfolie sequentiell orientiert wird und die Laminierung der Polyolefinfolie zwischen der Längs- und der Querorientierung der Polypropylenfolie erfolgt. In diesem Fall entspricht der Faktor f dem Querreckverhältnis der biaxial orientierten Polypropylenfolie und in der erfindungsgemäßen Folie ist die Polypropylen-Basisfolie biaxial und die laminierte Polyolefinfolie monoaxial, und zwar quer zur Maschinenlaufrichtung, orintiert.

In einer bevorzugten Ausführungsform erfolgt die Laminierung der Polyolefinfolie mit der Basisfolie ausschließlich durch erhöhten Druck und erhöhte Temperatur und ohne zusätzliche Klebstoffe. Dies hat den Vorteil, dass die Folie einen geringen Anteil an migrierenden und sensorisch wirksamen Substanzen aufweist, was vor allem beim Direktkontakt mit Lebensmitteln ein wichtiges Kriterium ist.

In einer weiteren bevorzugten Ausführungsform ist der Schmelzpunkt oder Erweichungspunkt der Polyolefinfolie kleiner als der Schmelzpunkt der biaxial orientierten Polypropylenfolie. Besonders bevorzugt ist eine Ausführungsform, bei der die Polyolefinfolie im Wesentlichen aus Propylen-Ethylen Copolymeren, Propylen-Butylen-. Ethylen Terpolymeren, Propylen-Butylen Copolymeren oder Mischungen davon besteht. Die laminierte Polyolefinfolie kann dabei gleichzeitig als Siegelschicht für die Verbundfolie dienen.

Die Dicke der laminierten Polyolefinfolie in der erfindungsgemäßen Verbundfolie beträgt bevorzugt 0,5 bis 15 µm, insbesondere 0,5 bis 5 µm.

Beidem bei dem aufgesprühten oder aufgedruckten Farbstoff handelt es sich um eine Lumineszenzfarbe, die UV-Licht absorbiert und längerwelliges, sichtbares Licht emittiert, wodurch bei Beleuchtung mit einer UV-Lampe ein bestimmter Farbeindruck erreicht werden kann. Die Lichtemittierung kann entweder sehr schnell nach der Absorbtion erfolgen, so dass man von Fluoreszenz spricht oder sie kann über einen längeren Zeitraum anhalten, so dass man von Phosphoreszenz redet. Diese Ausführungsform hat den Vorteil, dass das Sicherheitsmerkmal bei normalem Licht nicht sichtbar ist und die Ästhetik und Werbewirksamkeit der Verpackung nicht beeinträchtigt wird, während der Fachmann mit einfachen technischen Hilfsmitteln die Originalität der Verpackung nachweisen kann.

Das Sicherheitsmerkmal kann in Abhängigkeit des in der erfindungsgemäßen Folie verpackten Produktes in Aussehen und Farbe modifiziert werden. In diesem Fall ist es möglich die Rückverfolgbarkeit für das Produkt zu ermöglichen und z.B. das Herstelldatum, die Chargennummer des Produktes oder die Bezeichnung des Herstellortes in die Verpackung zu integrieren. Dieses integrierte Merkmal kann entweder verschlüsselt oder für jeden lesbar sein.

Ein weiterer Gegenstand der Erfindung ist die Verwendung der erfindungsemäßen Verbundfolie als Verpackungsmaterial.

### Beispiele

### Beispiel 1

Eine Folie der Dicke 10 µm aus 99 % Propylen-Ethylen-Copolymer (4,5 % Ethylen Monomergehalt, MFI=5 g/10min (230°C/2,16 kp/cm²), Dichte: 0,90 g/cm³), 0,3 Gew.- % N,N-Bis-(2-hydroxyethyl)-(C₁₂-C₁₆)-alkylamin, 0,6 Gew.- % eines Polydimethylsiloxans der Dichte von 0,985 g/cm³ bei 20°C und einer Viskosität von 10⁶ m Pa s und 0,1 Gew.- % Siliciumdioxid mit einer mittleren Teilchengröße von 4 µm wird im Flexodruckverfahren bedruckt. Die bedruckte Folie wird auf eine Folie aus Polypropylen der Dichte 0,91 g/cm³ und dem Schmelzindex von 3,0 g/10 min bei 230°C/21,6 N bei einer Temperatur von 80°C laminiert. Diese Laminierung erfolgt nach der Verstreckung der Folie aus Polypropylen in Laufrichtung (längs) mit einem Verstreckungsquotienten von 5/1 bei einer Temperatur von 140°C. Anschließend wird diese Verbundfolie quer zur Maschinenlaufrichtung mit einem Verstreckungsquotienten von 10/1 und bei einer Temperatur von 160°C verstreckt. Die Dicke der Gesamtfolie beträgt danach 16 µm. Die Dicke der Folienkomponente aus Propylen-Ethylen-Copolymer beträgt 1 µm.

### Beispiel 2

Eine Folie der Dicke 10 µm aus 99 % Propylen-Ethylen-Copolymer (4,5 % Ethylen Monomergehalt, MFI=5 g/10 min (230°C/2,16 kp/cm²), Dichte: 0,90 g/cm³), 0,3 Gew.- % N,N-Bis-(2-hydroxyethyl)-(C₁₂-C₁₆)-alkylamin, 0,6 Gew.- % eines Polydimethylsiloxans der Dichte von 0,985 g/cm³ bei 20°C und einer Viskosität von 10⁶ m Pa s und 0,1 Gew.- % Siliciumdioxid mit einer mittleren Teilchengröße von 4 µm wird mit einer im UV-Licht fluoreszierenden und in Ethylacetat gelösten Druckfarbe besprüht, indem die gelöste Druckfarbe mittels Druckluft fein zerstäubt wird. Die besprühte Folie wird auf eine Folie aus Polypropylen der Dichte 0,91 g/cm³ und dem Schmelzindex von 3,0 g/10 min bei 230°C/21,6 N bei einer Temperatur von 80°C laminiert. Diese Laminierung erfolgt nach der Verstreckung der Folie aus Polypropylen in Laufrichtung (längs) mit einem Verstreckungsquotienten von 5/1 bei einer Temperatur von 140°C. Anschließend wird diese Verbundfolie quer zur Maschinenlaufrichtung mit einem Verstreckungsquotienten von 10/1 und bei einer Temperatur von 160°C verstreckt. Die Dicke der Gesamtfolie beträgt danach 16 µm. Die Dicke der Folienkomponente aus Propylen-EthylenCopolymer beträgt 1 µm.

### Beispiel 3

Eine Folie der Dicke 10 µm aus 99 % Propylen-Ethylen-Copolymer (4,5 % Ethylen. Monomergehalt, MFI=5 g/10 min (230°C/2,16 kp/cm²), Dichte: 0,90 g/cm³), 0,3 Gew.- % N,N-Bis-(2-hydroxyethyl)-(C₁₂-C₁₆)-alkylamin, 0,6 Gew.- % eines Polydimethylsiloxans der Dichte von 0,985 g/cm³ bei 20°C und einer Viskosität von 10⁶ m Pa s und 0,1 Gew.- % Siliciumdioxid mit einer mittleren Teilchengröße von 4 µm wird im Flexodruckverfahren bedruckt. Die bedruckte Folie wird auf eine Folie aus Polypropylen der Dichte 0,91 g/cm³ und dem Schmelzindex von 3,0 g/10 min bei 230°C/21,6 N bei einer Temperatur von 80°C laminiert. Nach der Laminierung wird die Folie aus Polypropylen gleichzeitig in Laufrichtung (längs) mit einem Verstreckungsquotienten von 5/1 sowie quer zur Laufrichtung (quer) mit einem Verstreckungsquotienten von 10/1 bei einer Temperatur von 160°C verstreckt. Die Dicke der Gesamtfolie beträgt danach 16 µm. Die Dicke der Folienkomponente aus Propylen-Ethylen-Copolymer beträgt 1 µm.

Die in den Beispielen beschriebenen Folien weisen ein aufgedrucktes Merkmal auf, welches sich zwischen den Folienschichten befindet und welches nicht ablösbar oder entfernbar ist, ohne die Folie sichtbar zu beschädigen. Es kann dadurch von nachträglich aufgebrachten Merkmalen (Konter- oder Frontaldruck) unterschieden werden, dass letztere durch ein geeignetes organisches Lösungsmittel entfernt werden können. In Beispiel 2 ist das Merkmal außerdem nur bei Anstrahlung von ultraviolettem Licht sichtbar.

## Patentansprüche

1. Mehrschichtige, siegelbare Verbundfolie aus einer biaxial orientierten Polypropylenfolie als Basisfolie und mindestens einer weiteren Polyolefinfolie, **dadurch gekennzeichnet, dass** auf die Polyolefinfolie ein Farbstoff aufgebracht worden ist, wobei der Farbstoff ein Lumineszenzfarbstoff ist und zwischen den Folienschichten liegt und die Dicke der Verbundfolie zwischen 8 µm und 26 µm beträgt.

2. Verbundfolie nach Anspruch 1, **dadurch gekennzeichnet, dass** die Dicke der Verbundfolie zwischen 10 und 20 µm beträgt.

3. Verbundfolie nach Anspruch 1, **dadurch gekennzeichnet, dass** der Schmelzpunkt oder Erweichungspunkt der Polyolefinfolie kleiner ist als der Schmelzpunkt der biaxial orientierten Polypropylenfolie.

4. Verbundfolie nach Anspruch 3, **dadurch gekennzeichnet, dass** die Polyolefinfolie im Wesentlichen aus Propylen-Ethylen Copolymeren, Propylen-Butylen-Ethylen Terpolymeren, Propylen-Butylen Copolymeren und Mischungen davon besteht.

5. Verbundfolie nach Anspruch 1, **dadurch gekennzeichnet, dass** die Polyolefinfolie gleichzeitig als Siegelschicht für die Verbundfolie dient.

6. Verbundfolie nach Anspruch 1, **dadurch gekennzeichnet** das die Polyolefinfolie im Folienverbund eine Dicke von 0,5 bis 15 µm aufweist.

7. Verfahren zur Herstellung einer Verbundfolie gemäß einem der Ansprüche 1 bis 6, **dadurch gekennzeichnet, dass** die Laminierung der Polyolefinfolie mit der Basisfolie entweder vor Orientierung der Basisfolie oder zwischen der Längs- und Querorientierung der Basisfolie erfolgt.

8. Verbundfolie nach Anspruch 1, **dadurch gekennzeichnet, dass** die Laminierung der Polyolefinfolie mit der Basisfolie durch erhöhten Druck und erhöhte Temperatur erfolgt.

9. Verwendung einer Verbundfolie gemäß einem der Ansprüche 1 bis 6 als Verpackungsmaterial.

## Claims

1. Multilayer, sealable composite film made from a biaxially oriented polypropylene film as base film and from at least one other polyolefin film, **characterized in that** a dye has been applied to the polyolefin film, the dye is a luminescence dye and is located between the film layers, and the thickness of the composite film ranges from 8 to 26 µm.

2. Composite film according to Claim 1, **characterized in that** the thickness is from 10 to 20 µm.

3. Composite film according to Claim 1, **characterized in that** the melting point or softening point of the polyolefin film is lower than the melting point of the biaxially oriented polypropylene film.

4. Composite film according to Claim 3, **characterized in that** the polyolefin film is substantially composed of propylene-ethylene copolymers, of propylene-butylene-ethylene terpolymers, of propylene-butylene copolymers or of mixtures of these.

5. Composite film according to Claim 1, **characterized in that** the polyolefin film simultaneously serves as sealable layer for the composite film.

6. Composite film according to Claim 1, **characterized in that** the thickness of the polyolefin film in the film composite is from 0.5 to 15 µm.

7. Process for producing a composite film according to any of Claims 1 to 6, **characterized in that** the polyolefin film is laminated to the base film either prior to orientation of the base film or between the longitudinal and transverse orientation of the base film.

8. Composite film according to Claim 1, **characterized in that** increased pressure and increased temperature are used to laminate the polyolefin film to the base film.

9. Use of a composite film according to any of Claims 1 to 6 as packaging material.

## Revendications

1. Pellicule feuilletée à plusieurs couches, pouvant être cachetée comportant en tant que pellicule de base une pellicule en polypropylène d'orientation biaxiale et au moins une autre pellicule en polyoléfine, **caractérisée en ce que** sur la pellicule en polyoléfine est appliquée une matière colorante, cette matière colorante étant une matière colorante luminescente et étant disposée entre les couches de pellicules et l'épaisseur de la pellicule feuilletée est comprise entre 8 µm et 26 µm.

2. Pellicule feuilletée selon la revendication 1, **caractérisée en ce que** l'épaisseur de la pellicule feuilletée est comprise entre 10 et 20 µm.

3. Pellicule feuilletée selon la revendication 1, **caractérisé en ce que** le point de fusion ou le point de ramollissement de la pellicule de polyoléfine est inférieur au point de fusion de la pellicule en polypropylène d'orientation biaxiale.

4. Pellicule feuilletée selon la revendication 3, **caractérisée en ce que** la pellicule en polyoléfine est constituée pour l'essentiel de copolymères de polypropylène-éthylène, de terpolymères de propylène-butylène-éthylène, de copolymères propylène-butylène ou leurs mélanges.

5. Pellicule feuilletée selon la revendication 1, **caractérisée en ce que** la pellicule en polyoléfine joue simultanément le rôle de couche pouvant être cachetée pour la pellicule feuilletée.

6. Pellicule feuilletée selon la revendication 1, **caractérisée en ce que** la pellicule de polyoléfine présente dans la pellicule feuilletée une épaisseur de 0,5 à 15 µm.

7. Procédé pour la préparation d'une pellicule feuilletée selon l'une des revendications 1 à 6, **caractérisé en ce que** le laminage de la pellicule de polyoléfine avec la pellicule de base a lieu soit avant l'orientation de la pellicule de base soit après l'orientation en longueur ou en largeur de la pellicule de base.

8. Pellicule feuilletée selon la revendication 1, **caractérisée en ce que** le laminage de la pellicule de polyoléfine avec la pellicule de base a lieu sous pression élevée et sous température élevée.

9. Utilisation d'une pellicule feuilletée selon l'une des revendications 1 à 6 en tant que matériau d'emballage.
